# EUROPEAN PATENT APPLICATION

(11) **EP 1 379 104 A1**
(43) Date of publication of application: **07.01.2004**
(21) Application number: 01958705.4
(22) Date of filing: 26.07.2001
(51) Int. Cl.: H05B 3/26

(54) **METHOD FOR PRODUCING HEATING RADIATING BOARDS (VARIANTS)**

(30) Priority: 13.04.2001 RU 2001109837
(71) Applicant: Investment & Partners Inc., Belize City, Belize (BZ)
(72) Inventor: GOLOVENKOV, Alexei Vitalievich, Moscow, 121615 (RU); KOZLIKOV, Vadim Lvovich, Moscow, 129346 (RU); MARKEVICH, Maxim Alexandrovich, Moscow, 121165 (RU)
(74) Representative: Andrae, Steffen, Dr.
(86) International application number: PCT/RU2001/000310
(87) International publication number: WO 2002/091801

(57) **Abstract**

The invention relates to electrothermal devices, namely to the methods of manufacture of heating radiant panels and can be used for heating living and production quarters, as well as in industry for drying wood, sands and grain.

The method is carried out as follows. First of all, a substrate 1 is cleaned, washed, degreased, dried, and a conductive coating 2 is applied thereon. The conductive coating composition is preliminarily filtered and applied on the dielectric substrate 1 using any known method, for example, by dispersion or dipping. Then the layer is dried. If' necessary, the operations of applying the composite on the dielectric substrate and drying are,repeated several times. After that an additional conductive coating is made in the form of a strip 3. The configuration of the strip 3 may be of any shape and depends on a required temperature field of the heating radiant panel to be obtained. A protective layer 4 is applied on'the conductive coating 2 and on the additional conductive coating in the form of strips 3.

## Description

### FIELD OF THE INVENTION

Invention relates to electrothermal devices, namely to the methods of manufacture of heating radiant panels.

### BACKGROUND OF THE INVENTION

Known in the art is a method of manufacture of radiant panels (RU A, 2141177), in which a conductive coating layer is applied on a preformed dielectric or a metal substrate using the well known methods, then . substrate is dried to remove the solvent and a protective layer is applied thereon. If necessary, the operations of applying the conductive coating layer, drying and applying the protective layer are repeated. As a result, the heating radiant panel has rather high efficiency and allows the rooms to be quickly warmed up.

However, such a method does not allow one to obtain heating radiant panels with a uniform temperature field.

### DISCLOSURE OF THE INVENTION

A basis object of the invention is to provide a method of manufacture of heating radiant panels, which would allow one to produce a heating radiant panel having a uniform or predetermined profile of the temperature field and high operational reliability.

This object is attained by a method of manufacture of heating radiant panels including the.steps of applying a conductive coating on a dielectric substrate with power supply buses, applying a protective layer and drying the semi-finished product, in which, according to the invention, before applying the protective layer on the conductive coating, an additional conductive coating is applied in the form of at least one strip of an arbitrary shape. The ends of the above-mentioned strip are perpendicular to the power supply buses. The shape of the above-mentioned strip is selected depending on the parameters of the preset temperature field of the heating radiant panel.

The object of the invention is also attained by proving a method of manufacture of heating radiant panels including the steps of applying a conductive coating on a dielectric substrate with power supply buses, applying a protective layer and drying, in which, according to the invention before 'applying the protective layer on the conductive coating, at least one strip of the arbitrary shape is cut in the dielectric of the substrate.

The ends of the above-mentioned strip are perpendicular to the power supply buses. The shape of the above-mentioned strip is selected depending on the preset temperature field parameters.

The result attained by using the claimed method of manufacture of heating radiant panels is achievement of a uniform temperature field of the heating radiant panels due to selection of a proper shape of the strips of the additional conductive coating layer, as well as an increase of the reliability of the heating radiant panels.

### BRIEF DESCRIPTION OF THE DRAWINGS

The invention is further described on examples of some embodiments not limiting the scope of the present invention and with reference to the appended drawings, in which:
Fig. 1 is a general view of the heating radiant panel according to embodiment 1 of the method of forming an additional conductive coating layer;
Fig. 2 is a cross-section of the heating radiant panel shown in Fig. 1;
Fig. 3 is a view of the heating radiant panel according to embodiment 2 of the method' of forming the additional conductive coating layer;
Fig. 4 is a cross-section of the heating radiant shown in Fig. 3;
Fig. 5 is a view of the heating radiant panel according to embodiment 3 of the method of forming the additional conductive coating layer;
Fig. 6 is a cross-section of the heating radiant shown.in Fig. 5;

In the drawings the following reference numerals are used:

1 is the substrate; 2 is the conductive coating; 3 is the strip of an additional conductive coating layer; 4 is the protective layer; 5 is the first bus of the power supply; 6 is the second bus of the power supply.

### THE BEST EMBODIMENT OF THE INVENTION

The method according to claim 1 of the set of claims is effected as follows.

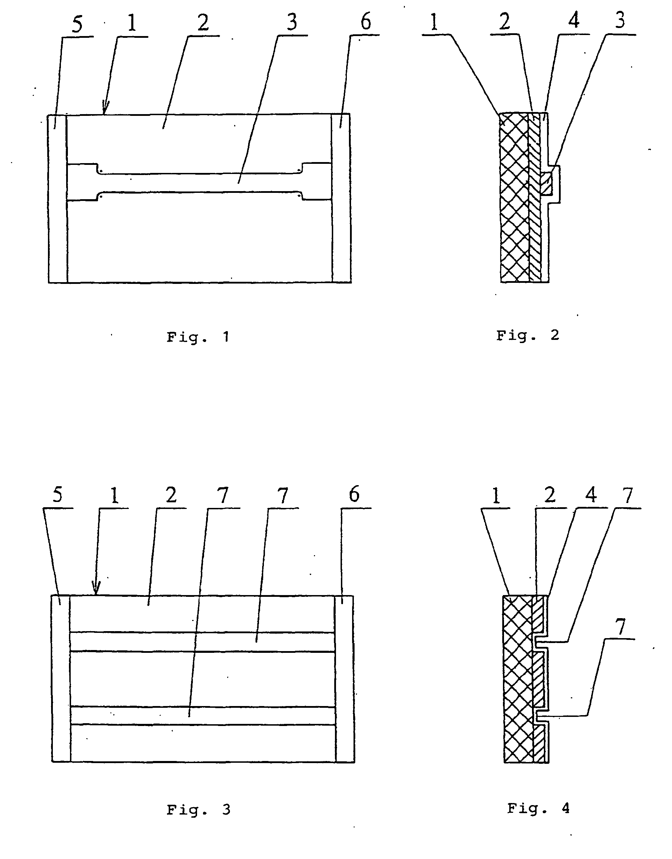

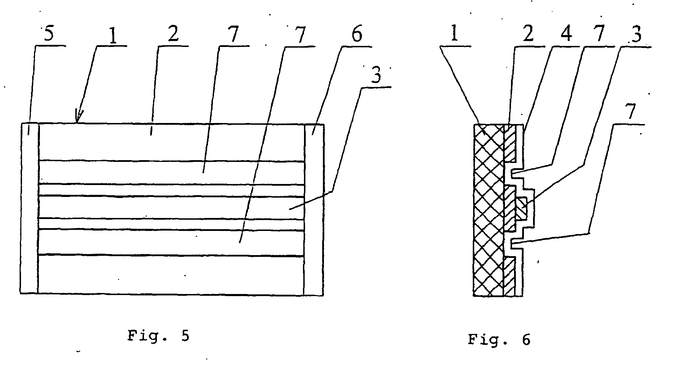

A substrate 1, which,can be made of metal with a protective dielectric layer or be made of a dielectric material, for example, glass-reinforced plastic, as shown in Figs. 1 and 2. The substrate 1 is preliminarily cleaned by dressing with sandpaper to obtain a good adhesive layer. Then the substrate 1 is rinsed in running water. For final cleaning, the substrate 1 is degreased by wiping with alcohol. After that the substrate 1 is dried at a temperature of 60° to 80°C. Having performed the above-described preparatory operations, the substrate 1 is faced with a conductive coating 2. Depending on a required power of the radiation to be obtained, the conductive coating 2, can be made of metal or a composite material. For the metallic conductive coating 2 use is made either of a metal foil or vacuum-plasma metal spraying with a subsequent growth of the layer to a required resistance level in order to increase the specific power of the heat fluxes and to simplify the coating technology.. The metal for the conductive coating may be copper, aluminum, stainless steel, nickel etc. The resistance of the metallic conductive coating 2 is selected so as to provide a specific heat generation power in a range of 10 to 25 kW/m at a power supply voltage of 20 to 250 V.

Let us consider an example, when the conductive coating is a composite material. The composition of the conductive coating 2 can be prepared as follows.

A film-forming polymer - polycarbonate is dissolved in a chlorine-containing solvent and to the obtained solution there is added a filler - carbon black. The obtained composition is filtered to release it from large-size particles of the filler. The composition of the conductive coating 2 is applied on the dielectric substrate 1 using any known method, for example, by dispersion or dipping. Then a drying procedure is effected to remove the solvent. In so doing the drying temperature is selected depending on the solvent type. If necessary, the operations of applying the compositions on the conductive coating 2 on the dielectric substrate 1 and drying are repeated several times until a required resistance and a given law of resistivity of the obtained conductive coating 2 are attained.

After that an additional conductive coating is applied. The configuration of the additional conductive coating may different: strips, broken strips and their combination, snake-shaped. The choice of configuration of the additional conductive coating depends on the temperature field to be obtained. Let us consider an example, in which the additional conductive coating is made as a single strip 3 whose ends are .perpendicular to the first power supply bus 5 and to the second power supply bus 6 respectively. The operation of applying the strip 3 can be performed by dispersion of a composition of the conductive coating through a stencil. In so doing one can easily obtain strips of an arbitrary shape. Then the operation of drying is effected as described above. Finally, applying a protective layer 4 and drying it provides mechanical and electrical protection of the conductive coating 2 and strip 3. The composition of the protective layer 4 can be obtained by dissolving of a film-forming polymer in an appropriate solvent.

According to the method by claim 2 of claims set, the operation of preparing the substrate 1 and applying the conductive coating layer 2 is effected as described in the method of claim 1. Then one or several strips, for example, two strips 7 are cut in the conductive coating 2 up to the dielectric of the substrate 1, as shown in Figs. 3 and 4. In so doing the strips 7 may have a different shape. However, ends of these strips 7' should be perpendicular to the first power supply bus 5 and second power supply bus 6 respectively. Then applying a protective layer 4 and its drying provides the mechanical and electrical protection of the conductive coating 2 and strip 7, as described above.

According to the method by claim 3 of the claims set, the operation of preparing the substrate 1 and applying the conductive coating layer 2 is effected as described in the method of claim 1. Then one or several strips, for example two strips 7 are cut in the conductive coating 2 up to the dielectric of the substrate 1 and, at the same time, an additional conductive coating is applied as a strip 3, as shown in Figs. 5 and 6. Then the mechanical and electrical protection of the conductive coating 2, strip 7 and strip 3, is effected by applying a protective layer 4 and its drying, as described above. In this method of manufacture of' a multilayer panel, the specific power of heat radiation is in a range of 2.0 to 5.0 kW/m at a supply voltage of 100 to 250 B.

Thus the claimed embodiments of the method of manufacture of heating radiant panels allow one to level the temperature field by creating a heat radiating surface with nonuniform resistance. The operational reliability of the panels is increased, for example, in the case of the power supply voltage jump and, as a consequence, a high rate of heating the panel. In this case only a small portion of the panel can fail instead of the whole panel. The failed section of the panel can easily be repaired.

### Industrial applicability

The invention can be used for heating living and production quarters, as well as in industry for drying wood, sands and grains.

## Claims

1. A method of manufacture of heating radiant panels comprising the steps of applying a conductive coating with power supply buses on a dielectric substrate, applying a protective layer and drying, ***characterized in that*** before applying the protective layer on the conductive coating, an additional conductive coating is applied in the form of at least one strip of an arbitrary shape, the ends of said strip being normal to the power supply buses and the strip shape being selected depending on the parameters of the preset temperature field of the heating radiant panel.

2. The method of manufacture of heating radiant panels comprising the 'steps of applying a conductive coating with power supply buses on a dielectric substrate, applying a protective layer and drying, ***characterized in that*** before applying the protective layer on the conductive coating, at least one strip of an arbitrary shape is cut up to the dielectric layer of the substrate, the ends of said strip being normal to the power supply buses and the strip shape'being selected depending on the parameters of the preset temperature field of the heating radiant panel.

3. The method of manufacture of heating radiant panels comprising the steps of applying a conductive coating with power supply buses on a dielectric substrate, applying a protective layer and drying, ***characterized in that*** before applying the protective layer on the conductive coating, at least one strip of an arbitrary shape is cut up to the dielectric layer of the substrate and an additional conductive coating of an arbitrary shape is applied, the ends of all strips being normal to the power supply buses and the shape of all strip being selected depending on the parameters of the preset temperature field of the heating radiant panel.
